# EUROPEAN PATENT SPECIFICATION

(11) **EP 1 128 080 B1**
(45) Date of publication and mention of the grant of the patent: **22.08.2007**
(21) Application number: 01102623.4
(22) Date of filing: 07.02.2001
(51) Int. Cl.: F16D 11/14

(54) **Four wheel drive engagement device**
Vierradantrieb- Einschaltvorrichtung
Dispositif pour l'engagement d'une transmission à quatre roues

(30) Priority: 23.02.2000 GB 0004139
(43) Date of publication of application: 29.08.2001
(73) Proprietor: AGCO LIMITED, Coventry, CV4 9GF (GB)
(72) Inventor: Barton, John Robert, Barnacale, Coventry CV7 9LD (GB); Owen, Sion Morgan, Claybrooke Magna, Lutterworth LE17 5DU (GB)
(74) Representative: Morrall, Roger

(56) References cited:
- DE-A- 4 138 917
- FR-A- 2 614 864
- GB-A- 1 146 591
- US-A- 4 307 795
- US-A- 6 112 873

## Description

### Field of the Invention

This invention relates to an actuating system for a clutch, and in particular to an actuating system for a clutch which engages and disengages drive to the front axle of a vehicle, such as a tractor.

### Background to the Invention

Utility vehicles such as agricultural and industrial tractors often comprise a front axle, which may be driven. Some vehicles have permanent four wheel drive, but most vehicles are provided with means to selectively engage and disengage drive to the front axle. Generally it is considered preferable to provide for disengagement of drive to the front axle so that the vehicle can be driven on roads and other surfaces where there is a high level of grip between the tyres and the surface without torque wind up occurring in the drive-line.

Whilst it is generally undesirable to drive on roads and the like with drive to the front axle engaged, in certain scenarios it is preferable to engage drive to the front wheels. For instance, by engaging drive to the front axle during braking of the vehicle, the braking efficiency of the vehicle is increased, and hence its stopping distance is decreased. It is therefore common for four-wheel drive tractors to be equipped with means to selectively engage and disengage drive to the front axle, and control means to control the engagement of drive to the front axle. The control means may disengage drive to the front axle when the speed of the vehicle exceeds a certain threshold (indicative of the vehicle travelling on a road or the like), and it may also engage drive to the front axle on actuation of the brakes, disengaging drive on release of the brakes.

One type of mechanism for engaging and disengaging drive the front axle consists of a wet clutch, which be engaged and disengaged hydraulically. The engagement and disengagement of such wet clutches can be controlled electronically, and as such this type of arrangement is particulary suitable for the task. However, this type of arrangement is relatively complex and costly.

Another type of mechanism for engaging and disengaging drive to the front axle consists of a dog clutch, the dogs being engaged by means of a spring, and disengaged by hydraulic pressures. This arrangement is satisfactory, but the time taken for the dogs to disengage is subject to variation due to the load on the front axle. This means that if a tractor is equipped with a front loader, or is carrying a heavy implement on the front linkage, drive to the front axle will not disengage as quickly as it would if the loader or implement were not present.

DE 41389178 show such an arrangement in which the flank angles of the dog teeth are generally aligned with the axis of rotation of the dogs to provide the requirement for low forces to engage the dog teeth.

Another type of mechanism for engaging and disengaging drive to the from axle again consists of a dog clutch. However, in this mechanism the dog teeth have flanks inclined at an angle of approximately 20 degrees so that a separation force is automatically generated which tends to disengage the dog teeth if no axial force is applied to hold the dog teeth in engagement. Springs also provide an additional separation force. The dog teeth are held in engagement by toggle members. Engagement is by hydraulic pressure, release of hydraulic pressure allowing the springs, together with the angled faces of the dog teeth, to disengage the dog clutch.
This mechanism ensures rapid engagement and disengagement of drive to the front axle. However, where the brakes are being applied and released rapidly and successively this results in the rapid and successive engagement and disengagement of drive to the front axle. Each time the dog clutch is engaged and disengaged a load is placed on the drive line which causes the driver to experience a jolt.

US-A-4307795 discloses a cam operated clutch mechanism for a lawn mower in which an input shaft is coupled to an output shaft via a sliding dog coupler. This reference also refers to the use of dog teeth with an inclination of about six degrees allowing disengagement of the dog teeth even when under load although such tooth angles are said to shorten tooth life.

It would therefore be desirable to provide a simple mechanism for engaging and disengaging drive to the front axle of a tractor, which is not limited in the way the above-mentioned mechanisms are.

It has been found that the objective of the invention can be achieved by providing dog teeth having flanks inclined at an angle which falls within a particular range. Within the range a separation force is automatically generated which tends to disengage the dog teeth if no axial force is applied to hold the dog teeth in engagement, but the result is relatively slow disengagement of the dog clutch as opposed to almost instantaneous disengagement. When an increased load is placed on the front axle, the load on the input and output shafts, and hence the separating load generated by the dog teeth, is increased.

### Summary of the Invention

The invention thus provides a drive train comprising a first shaft and a second shaft and a dog clutch for selectively engaging and disengaging drive between the said shafts, the dog clutch comprising first and second toothed dog members, wherein the first and second dog members are arranged for relative axial movement therebetween to engage and disengage drive between the said shafts, and wherein at least one of the flanks of the or each dog tooth is inclined at an angle ∝ said angle ∝ being in the range 5 to 10 degrees, the drive train being characterised in that locking means are provided to lock the said dog members in the engaged position, in that the locking means comprises a locking member mounted in the shaft mounting the dog members for movement between locked and unlocked positions, and an actuator is provided to move the locking member between the two positions, wherein in the locked position a portion of the locking member protrudes beyond the outer surface of the said shaft and engages with the slidably mounted dog member preventing axial movement thereof to lock the dog clutch in engagement, and in that in the unlocked position the locking member does not engage with the dog member thereby permitting the dog member to slide axially on the said shaft to disengage the dog clutch.

Preferred features of the drive train according to the invention are described in the claims dependent on Claim 1.

### Brief Description of the Drawings

In the drawings, which illustrate exemplary embodiments of the invention:
Figure 1 is a cross-section of a drive train according to the invention mounted in a transmission casing;
Figure 2 is a cross-section of the drive train shown in Figure 1 with the clutch in the engaged position;
Figure 3 is a cross-section of the drive train shown in Figure 1 with the clutch in the disengaged position; and
Figure 4 is a schematic representation of a four-wheel-drive tractor comprising an actuating system according to the invention.

### Detailed Description of the Drawings

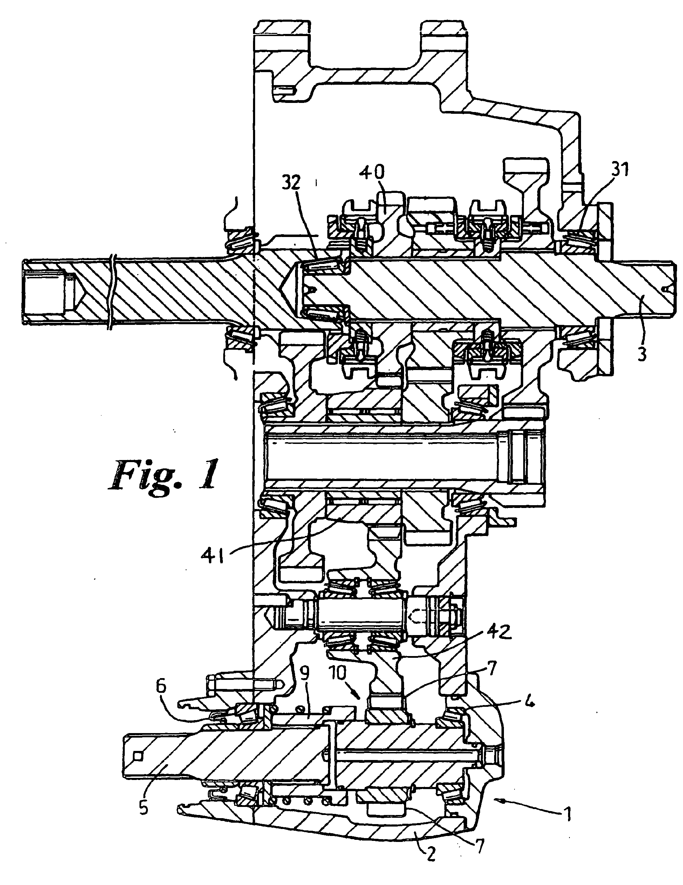

Referring now to Figure 1, there is shown a tractor front wheel drive train 1 comprising a transmission case 2, an input shaft 3 rotatably mounted in the case 2 by means of bearings 31, 32, and an output shaft 5 rotatably mounted in the case 2 by means of bearings 4, 6. The input shaft 3 carries a first gear wheel 40, and through gears 41 and 42 transmits torque to a first dog member 7 having gear teeth around the circumference thereof which mesh with a gear 42 The dog member 7 is mounted on the shaft 5 to permit relative rotation therebetween. The dog member 7 forms half of a dog clutch 10, the other half of the dog clutch comprising a second dog member having an internally splined collar 9 which is slidably mounted on the externally splined output shaft 5. The opposing end faces of the dog members 7 and 9 each comprise at least one dog tooth, thereby transmitting drive from the input shaft to the output shaft when the dog clutch 10 is engaged. The clutch actuation system of the invention will now be described in more detail with reference to Figures 1 to 3.

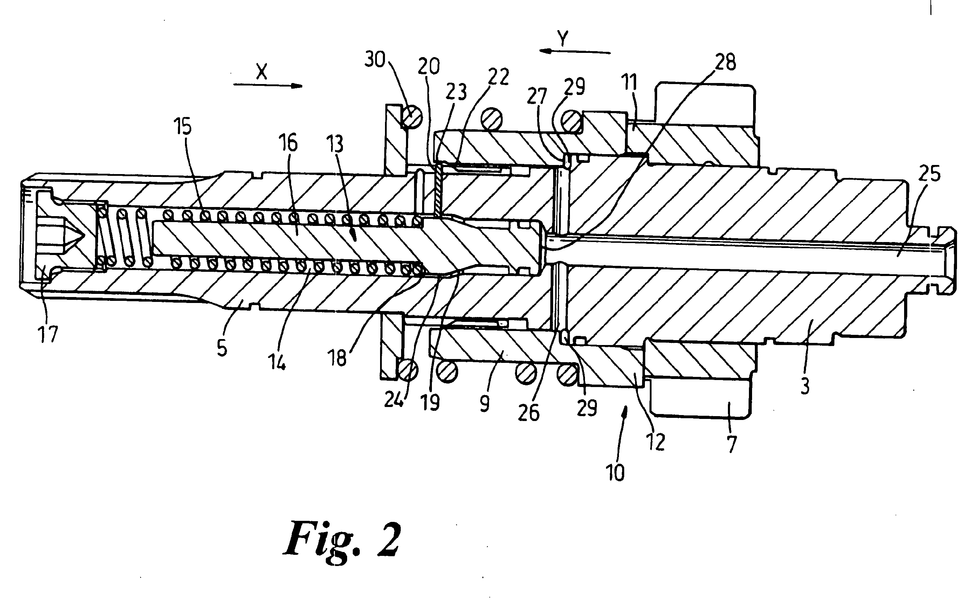

In Figure 2 the dog teeth 11 and 12 of the dog members 7 and 9 respectively are engaged. A piston 13 is slidably mounted inside a bore 14 in the output shaft 5. A spring 15 surrounds a shaft portion 16 of the piston, the ends of the spring engaging at one end with a stop 17 and at the other end with a step portion 18 of the piston 13, the spring 15 biasing the piston in the direction of arrow X.

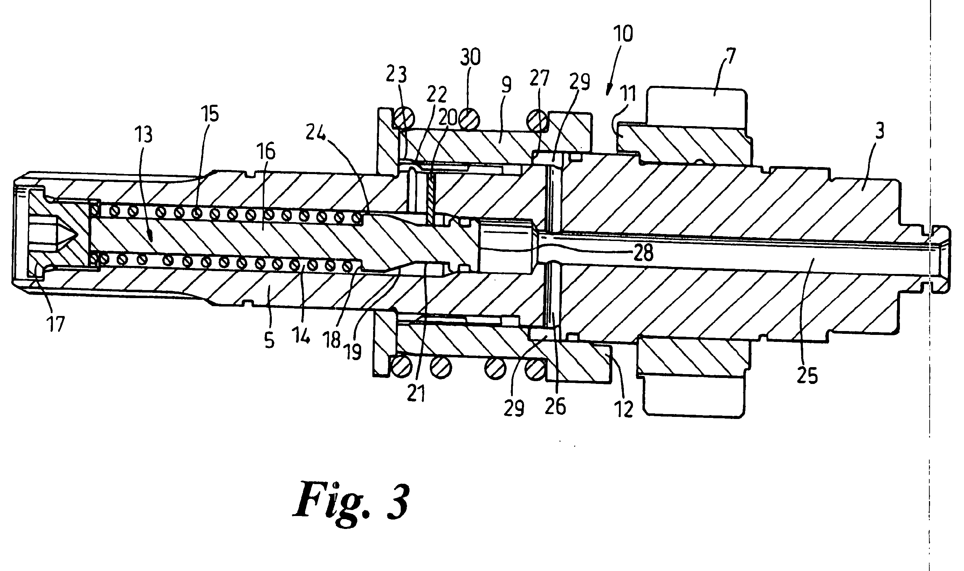

The piston 13 comprises a cam surface 19 which operates a locking pin 20. In the disengaged position illustrated in Figure 3, the pin 20 rests on the surface 21 of the piston 13. On engagement of the dog clutch, the piston, 13 moves with respect to the cylinder 5, the pin 20 engages. with the cam surface 19 and is moved radially outwards. Continued movement the piston 13 brings into the position shown in Figure 2, where the pin 20 is held between the surfaces 23 and 24 of the collar 9 and piston 13 respectively.

In the position shown in Figure 2 the dog clutch 10 is locked in engagement. The pin 20 is in the path of the angled 22 of collar 9, thereby preventing movement of the collar 9 in the direction indicated by arrow Y. The pin 20 cannot be moved radially inwards because it is engagement with the surface 24 of the piston 13.

Movement from the engaged position shown in Figure 2 to the disengaged position shown in Figure 3 is achieved by introducing hydraulic fluid into the bore 25 in the output shaft 5. Hydraulic fluid pressure acts on the end face 28 of the piston 13 and, when the fluid pressure is greater than the force exerted by the spring 15, the piston moves in the direction Y. Movement of the piston 13 allows the pin 20 to move radially inwards. The introduction of hydraulic fluid through the bore 25 fills the bore 26 with hydraulic fluid. It can be seen that the collar 9 has a step portion 27, which forms a chamber 29. When the hydraulic fluid pressure is sufficient to overcome the force generated by the spring 30, the collar 9 moves in the direction Y and the dog teeth 11, 12 disengage, as shown in Figure 3. The longitudinal axis of the pin 20 lies in the path of the angled surface 22, movement of the collar 9 in the Y direction thereby ensuring the retraction of said pin.

The dog teeth 11 and 12 have angled flanks inclined at an angle of approximately 7 degrees so that a separation force is automatically generated, which tends to disengage the dog teeth if no axial force is applied to hold the dog teeth in engagement. The shallow angle of approximately 7 degrees means that when disengagement of the clutch 10 is initiated, the combined force of the hydraulic pressure in chamber 29 and the axial force generated by the engaging dog teeth, does not result in instantaneous disengagement of the dog clutch 10 when a significant torque is applied, rather a short time interval will elapse as the dog clutch disengages.

The invention thereby overcomes the problems associated with dog clutch actuation systems where the flanks of the dog teeth are parallel, i.e. the dogs do not disengage quickly enough (certain load conditions increasing the time taken for the dogs to disengage), and the problems associated with dog clutch actuation systems where the flanks of the dog teeth have steep angles which results in noise and jolting of the drive line and hence the vehicle.

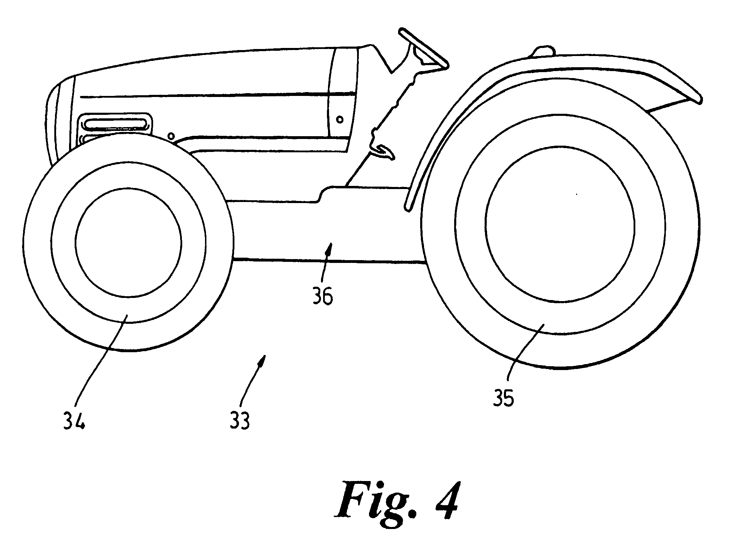

Referring now to Figure 4, there is shown a tractor 33 comprising front and rear driven wheels 34, 35, and a transmission 36 comprising a drive train according to the invention to transmit drive to the front axle.

## Claims

1. A drive train comprising a first shaft (3) and a second shaft (5) and a dog, clutch (10) for selectively engaging and disengaging drive between the said shafts, the dog clutch comprising first and second toothed dog members (11,12), wherein the first and second dog members are arranged for relative axial movement therebetween to engage and disengage drive between the said shafts (3,5), and wherein at least one of the flanks of the or each dog tooth (11,12) is inclined at an angle ∝, said angle ∝ being in the range 5 to 10 degrees, the drive train being **characterised in that** locking means (19,20) are provided to lock the said dog members in the engaged position, **in that** the locking means comprises a locking member (20) mounted in the shaft (5) mounting the dog members (11,12) for movement between locked and unlocked positions, and an actuator (13,19,28) is provided to move the locking member (20) between the two positions, wherein in the locked position a portion of the locking member (20) protrudes beyond the outer surface of the said shaft (5) and engages with the slidably mounted dog member (9,12) preventing axial movement thereof to lock the dog clutch in engagement, and **in that** in the unlocked position the locking member (20) does not engage with the dog member (9,12) thereby permitting the dog member to slide axially on the said shaft (5) to disengage the dog clutch (10).

2. A drive train according to claim 1, **characterised in that** said dog members (11,12) are mounted on one (5) of the first or second shafts (3,5), and **in that** at least one of the dog members (12) is slidably mounted on the said shaft.

3. A drive train according to claim 1 or 2 **characterised in that** a disengaging means is provided in the form of a fluid operated actuator (26,27,29) to move one (12) of said dog members axially thereby disengaging the dog members (11,12).

4. A drive train according to any preceding claim, further **characterised in that** biasing means (30) are provided to bias the teeth of the dog members (11,12) into engagement.

5. A drive train according to Claim 4 **characterised in that** the said biasing means comprises a spring (30).

6. A drive train according to claim 3 **characterised in that** said dog member actuator comprises a piston (9) slidably mounted on the shaft (5) mounting the dog members (11,12), the piston comprising a step portion (27) which together with said shaft (5) forms a chamber (29) into which hydraulic fluid is introduced, the piston sliding axially along the said shaft to disengage the dog clutch (10).

7. A drive train according to any one of claims 1 to 6 **characterised in that** the locking member actuator comprises a piston (13) mounted in a bore (14) in the said shaft (5), the piston being movable between locking and unlocking positions, and wherein the piston comprises a cam surface (19), the locking member (20) resting on the cam surface, and wherein the locking member follows the cam surface during axial movement of the piston (13) to move the locking member (20) between its locked and unlocked positions.

8. A drive train according to Claim 7, further **characterised by** biasing means (15) to bias the piston (13) into the locked position.

9. A drive train according to Claim 7 **characterised by** one end of the said bore (14) is open (25) to a supply of pressurised fluid, introduction of fluid moving the piston (13) against the biasing means (15) into the unlocking position.

10. A drive train according to claim 9 **characterised in that** said shaft (3) comprises a bore (25) through which pressurised fluid is introduced to disengage the dog clutch (10).

11. A tractor comprising front and rear drivable wheels (34,35), the tractor being **characterised by** the inclusion of a drive train according to any of Claims 1 to 10 wherein drive to the front drivable wheels (34) may be selectively engaged or disengaged by engaging or disengaging said dog clutch (10).

## Patentansprüche

1. Antrieb mit einer ersten Welle (3) und einer zweiten Welle (5) und einer Klauenkupplung (10) zum selektiven Ein- und Ausrücken des Antriebs zwischen den Wellen, wobei die Klauenkupplung erste und zweite gezahnte Klauen (11, 12) aufweist, die zum Ein- und Ausrücken des Antriebs zwischen den Wellen (3, 5) zueinander axial beweglich angeordnet sind, und wobei mindestens eine Flanke der oder jeder Klaue (11, 12) geneigt in einem Winkel α in einem Bereich zwischen 5° und 10° angeordnet ist, **dadurch gekennzeichnet, dass** Mittel (19, 20) zum Blockieren der Klauen in der eingerückten Stellung vorgesehen sind, dass die Mittel ein Element (20) für die Blockierung der Axialbewegung zwischen der eingerückten und der ausgerückten Stellung auf der die Klauen (11, 12) tragenden Welle (5) aufweisen, und dass ein Aktuator (13, 19, 28) zum Bewegen des Elements (20) zwischen den beiden Stellungen vorgesehen ist, wobei in der blockierten Stellung ein Teil des Elements (20) über die äußere Oberfläche der Welle (5) vorsteht und mit der gleitend angeordneten Klaue (9, 12) in Kontakt kommt, so dass deren Axialbewegung bei eingerückter Kupplung verhindert ist, und dass das Element (20) in der unblockierten Stellung mit der Klaue (9, 12) nicht in Kontakt kommt, so dass die Axialbewegung relativ zu der Welle (5) in die ausgerückte Stellung der Klauenkupplung (10) möglich ist.

2. Ein Antrieb nach Anspruch 1, **dadurch gekennzeichnet, dass** die Klauen (11, 12) auf einer (5) der Wellen (3, 5) angeordnet sind, und dass mindestens eine Klaue (12) gleitend auf der Welle gelagert ist.

3. Ein Antrieb nach Anspruch 1 oder 2, **dadurch gekennzeichnet, dass** Mittel zum Ausrücken in Form eines durch ein Fluid betätigbaren Aktuators (26, 27, 29) vorgesehen sind, um eine Klaue (12) axial zu bewegen und damit die Klauen außer Eingriff zu bringen.

4. Ein Antrieb nach einem der vorangehenden Ansprüche, **dadurch gekennzeichnet, dass** ein Mittel (30) zum Beaufschlagen der Zähne der Klauen (11, 12) in Eingriffsrichtung vorgesehen ist.

5. Ein Antrieb nach Anspruch 4, **dadurch gekennzeichnet, dass** das Mittel eine Feder (30) aufweist.

6. Ein Antrieb nach Anspruch 3, **dadurch gekennzeichnet, dass** der Aktuator zum Betätigen der Klaue einen gleitend an der die Klauen (11, 12) tragenden Welle (5) gelagerten Kolben (9) aufweist, wobei der Kolben eine Stufe (27) aufweist, die mit der Welle (5) eine hydraulisch beaufschlagbare Kammer (29) bildet, um den Kolben zum Ausrücken der Klauenkupplung (10) axial auf der Welle zu verschieben.

7. Ein Antrieb nach einem der Ansprüche 1 bis 6, **dadurch gekennzeichnet, dass** der Aktuator zum Betätigen des Elements einen in einer Bohrung (14) der Welle (5) angeordneten Kolben (13) aufweist, der zwischen einer blockierenden und einer nicht-blockierenden Stellung bewegbar ist, und wobei der Kolben eine Nockenfläche (19) aufweist, auf der sich das Element (20) abstützt und der Nockenfläche während der Axialbewegung des Kolbens (13) folgt, um das Element (20) zwischen der blockierenden und einer nicht-blockierenden Stellung zu bewegen.

8. Ein Antrieb nach Anspruch 7, **dadurch gekennzeichnet, dass** ein Mittel (15) zum Beaufschlagen des Kolbens (13) in die blockierende Stellung vorgesehen ist.

9. Ein Antrieb nach Anspruch 7, **dadurch gekennzeichnet, dass** das eine Ende der Bohrung (14) für die Zufuhr eines unter Druck stehenden Fluids offen (25) ausgebildet ist, wobei die Zufuhr des Fluids den Kolben (13) gegen das Mittel (15) in die nicht-blockierende Stellung beaufschlagt.

10. Ein Antrieb nach Anspruch 9, **dadurch gekennzeichnet, dass** die Welle (3) eine Bohrung (25) aufweist, durch die ein unter Druck stehendes Fluid eingebracht werden kann um die Klauenkupplung (10) auszurücken.

11. Ein Schlepper mit vorderen und hinteren Antriebswellen (34, 35), **dadurch gekennzeichnet, dass** ein Antrieb nach einigen der Ansprüche 1 bis 10 vorgesehen ist, wobei der Antrieb der vorderen Antriebswellen (34) durch das Einrücken oder Ausrücken der Klauenkupplung (10) selektiv zuschaltbar ist.

## Revendications

1. Chaîne cinématique comprenant un premier arbre (3) et un second arbre (5) et un embrayage à griffes (10) permettant d'engager et de désengager de manière sélective une transmission entre lesdits bras, l'embrayage à griffes comprenant des premier et seconds éléments à griffes dentées (11,12), dans lequel les premier et second éléments à griffes sont disposés afin de faire un mouvement axial relatif entre eux afin d'engager et de désengager la transmission entre lesdits arbres (3,5), et dans lequel au moins un des flancs de la ou de chaque crabot (11,12) est incliné à un angle α, ledit angle α étant compris entre 5 et 10 degrés, la chaîne cinématique étant **caractérisée en ce que** les éléments de verrouillage (19,20) sont fournis afin de verrouiller lesdits éléments à griffes en position engagée, **en ce que** l'élément de verrouillage comprend un membre de verrouillage (20) monté sur l'arbre (5) supportant les éléments à griffe (11,12) pour passer de la position verrouillée à la position déverrouillée, et un actionneur (13,19,28) est fourni pour déplacer l'élément de verrouillage (20) entre les deux positions, dans lequel en position verrouillée une partie de l'élément de verrouillage (20) fait saillie au delà de la surface extérieure dudit arbre (5) et s'engage avec l'élément à griffes coulissant (9,12) évitant un mouvement axial de celui-ci afin de verrouiller l'embrayage à griffes engagé, et **en ce que** en position déverrouillée l'élément de verrouillage (20) ne s'engage pas avec l'élément à griffes (9,12) permettant ainsi à l'élément à griffes de coulisser axialement sur ledit arbre (5) pour désengager l'embrayage à griffes (10).

2. Chaîne cinématique selon la revendication 1, **caractérisée en ce que** les éléments à griffes (11,12) sont montés sur un (5) des premier ou second arbres (3,5), et **en ce que** au moins un des éléments à griffes (12) est monté de manière coulissante sur ledit arbre.

3. Chaîne cinématique selon la revendication 1 ou 2 **caractérisée en ce qu'**un moyen de désengagement est fourni sous la forme d'un actionneur à fluides (26, 27,29) pour déplacer axialement un (12) desdits éléments à griffes, désengageant ainsi les éléments à griffes (11,12).

4. Chaîne cinématique selon l'une quelconque des revendications précédentes, **caractérisée en outre en ce que** des moyens de contrainte (30) sont fournis pour obliger les dents des éléments à griffes (11,12) à s'engager.

5. Chaîne cinématique selon la revendication 4 **caractérisée en ce que** lesdits moyens de contrainte comprennent un ressort (30).

6. Chaîne cinématique selon la revendication 3 **caractérisée en ce que** l'actionneur d'élément à griffes comprend un piston (9) monté de manière à coulisser sur l'arbre (5) supportant les éléments à griffes (11,12), le piston comprenant une partie en gradin (27) qui forme avec ledit arbre (5) une chambre (29) dans laquelle un fluide hydraulique est introduit, le piston coulissant axialement le long dudit bras pour désengager l'embrayage à griffes (10).

7. Chaîne cinématique selon l'une quelconque des revendications 1 à 6 **caractérisée en ce que** l'actionneur de l'élément de verrouillage comprend un piston (13) monté dans un alésage (14) dans ledit arbre (5), le piston pouvant passer de la position verrouillée à la position déverrouillée, et dans laquelle le piston comprend une surface de came (19), l'élément de verrouillage (20) restant sur la surface de came, et dans laquelle l'élément de verrouillage suit la surface de came durant le mouvement axial du piston (13) afin de passer l'élément de verrouillage (20) de la position verrouillée à la position déverrouillée.

8. Chaîne cinématique selon la revendication 7, **caractérisée en outre en ce que** les moyens de contrainte (15) exercent une pression sur le piston (13) jusqu'à atteindre la position verrouillée.

9. Chaîne cinématique selon la revendication 7 **caractérisée en ce que** une extrémité dudit alésage (14) est ouverte (25) pour un approvisionnement en fluide pressurisé, l'introduction de fluide déplaçant le piston (13) contre les moyens de contrainte (15) jusqu'à atteindre la position déverrouillée.

10. Chaîne cinématique selon la revendication 9 **caractérisée en ce que** ledit arbre (3) comprend un alésage (25) par lequel un fluide pressurisé est introduit pour désengager l'embrayage à griffes (10).

11. Tracteur comprenant des roues à entrainement avant et arrière (34,35), ledit tracteur étant **caractérisé par** l'inclusion d'une chaîne cinématique selon l'une quelconque des revendications 1 à 10 dans laquelle la transmission des roues à entrainement avant (34) peut être engagée ou désengagée de manière sélective en engageant ou en désenqaqeant ledit embrayage à griffes (10).
